# EUROPEAN PATENT APPLICATION

(11) **EP 2 568 684 A1**
(43) Date of publication of application: **13.03.2013**
(21) Application number: 12195638.7
(22) Date of filing: 29.10.2008
(51) Int. Cl.: H04L 29/06, H04L 29/08

(54) **Method, device, system, client node, peer node and convergent point for preventing node from forging identity**

(30) Priority: 02.02.2008 CN 200810006832
(62) Divisional of application: 08872189.9
(71) Applicant: Huawei Technologies Co., Ltd., Longgang District, Shenzhen Guangdong 518129 (CN)
(72) Inventor: Li, Feng, 518129 Shenzhen (CN); Jiang, Xinfeng, 518129 Shenzhen (CN); Jiang, Haifeng, 518129 Shenzhen (CN)
(74) Representative: Isarpatent

(57) **Abstract**

In the field of overlay network, a method, a device, a system, a client node, a peer node and a convergent point for preventing a node from forging ID in a P2P network are provided, so as to solve the problems of high overhead and long delay in the existing technical solution for preventing node cheating. The method includes the following steps. After a client node finds a peer node serving the client node, at least one of the client node and the peer node performs ID authentication. After the authentication succeeds, the client node or the peer node establishes an ID anti-forgery log about the other party. The invention is widely applicable to ID authentication for network equipment in a P2P network.

## Description

### FIELD OF THE TECHNOLOGY

The present invention relates to the field of overlay network, and more particularly to a method, a device, a system, a client node, a peer node, and a convergent point for preventing a network equipment from forging identity (ID).

### BACKGROUND OF THE INVENTION

An overlay network is a virtual network built on one or more existing underlying networks (for example, a physical network or a logical network). The overlay network can implement certain functions that are difficult for the underlying network, such as message routing or topology maintenance.

The Peer to Peer (P2P) overlay network (that is, P2P network) is an overlay network built in a P2P mode based on the existing Internet. In the P2P network, the functions such as equal status and resource sharing among the peer nodes (peers) in the P2P network can be implemented based on the existing Internet (such as client node/server network).

The P2P network has two types of entities: peer node and client node. In addition to having the function of resource sharing, the peer node participates in the organization and maintenance of the P2P network, including routing, storage, and other functions. The functions of the client node are relatively simple. It needs to forward a request to the network via the peer node, and has no routing function, that is, a routing in the network does not pass the client node.

In a P2P network, each peer node and client node has an ID. In routing, keys/value pairs and values corresponding to the keys in the network are stored or read according to the peer node ID (peer ID). The client node receives services provided by the peer node according to the client node ID. The peer node ID and the client node ID are obtained according to certain rules, for example, the former is obtained through Hash algorithm, and the latter is allocated by a management server.

A malicious node can easily forge the peer node ID and the client node ID. The malicious node attacks the network or illegally obtains network resources by forging the peer node ID, and avoids the cost for using network resources by forging other client node IDs.

To prevent ID forging, a commonly used method is as follows. Before each client node joins the network, the client node ID is authenticated by a third-party institution or organization, and the client node passing the authentication can obtain a certificate to join the network. The client node signs the self-generated message according to the private key of the certificate, and authenticates and signs the received message.

During the implementation of the present invention, the inventors found that the above technical solution has the following problems. As the certificate and the client node are bound in the above method, the costs are relatively high in spite of the capability of preventing ID forging. Firstly, in the method, a Public Key Infrastructure (PKI) system needs to be deployed in the network, but the costs of the deployment are high, and moreover, the system maintenance costs are high. Secondly, the client node needs to sign each sent message and each received message, which results in a relatively long delay in network message routing. As a result, the method cannot necessarily satisfy a streaming media service with high requirements on delay. Thirdly, in certain simple application environments, even though both the client node and the peer node have certificates, the certificates are not necessarily used to authenticate messages, and only ID authentication is needed.

### SUMMARY OF THE INVENTION

An embodiment of the present invention provides a method for preventing a node from forging ID in a P2P network, which addresses the problem that costs are high in deployment and maintenance when a PKI is deployed in the existing technical solution for preventing peer node cheating, and addresses the problem that message routing delay is long when signature verification is performed for each sent message and each received message in the existing technical solution for preventing peer node cheating.

To achieve the objectives, the method for preventing a node from forging ID according to the embodiment of the present invention includes the following steps.

After a client node finds a peer node serving the client node, at least one of the client node and the peer node acts as an authentication initiator and authenticates the other party.

After the authentication succeeds, the client node or the peer node acting as the authentication initiator locally establishes and stores an ID anti-forgery log about the other party.

In the method for preventing a node from forging ID according to the embodiment of the present invention, the peer node or the client node locally stores an ID anti-forgery log, which solves the problem that the costs are high in deployment and maintenance when a PKI is deployed in the existing technical solution for preventing peer node cheating. The process of malicious node identification by using the ID anti-forgery log is simple, effective, and the detection costs are low. The problem that message routing delay is long when signature verification is performed for each sent and received message in the existing technical solution for preventing peer node cheating is solved. When the malicious node is identified by using the ID anti-forgery log, only the node ID needs to be verified, while signature verification is not necessarily performed for each sent and received message, and thus the routing delay is shortened.

In an embodiment, the present invention further provides a device for preventing a node from forging ID in a P2P network, which addresses the problem that costs are high in deployment and maintenance when a PKI is deployed in the existing technical solution for preventing peer node cheating, and addresses the problem that message routing delay is long when signature verification is performed for each sent and received message in the existing technical solution for preventing peer node cheating.

To achieve the objectives, the device for preventing a node from forging ID according to the embodiment of the present invention adopts the following technical solution. The device includes an authentication unit 1, a storage unit 2, and an identification unit 3.

The authentication unit 1 is configured to authenticate validity of an ID of a node.

The storage unit 2 is configured to establish and store an ID anti-forgery log about the authenticated node ID.

The identification unit 3 is configured to identify a malicious node according to the ID anti-forgery log.

In the device for preventing a node from forging ID provided in the embodiment of the present invention, the peer node or the client node stores an ID anti-forgery log in the local storage unit, which solves the problem that costs are high in deployment and maintenance when a PKI is deployed in the existing technical solution for preventing peer node cheating. The process for the identification unit to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit identifies a malicious node by using the ID anti-forgery log, the authentication unit simply verifies the node ID, while signature verification is not necessarily performed for each sent and received message, and thus the routing delay is shortened.

In an embodiment, the present invention provides a client node, which addresses the problem that costs are high in deployment and maintenance when a PKI is deployed in the existing technical solution for preventing peer node cheating, and addresses the problem that message routing delay is long when signature verification is performed for each sent and received message in the existing technical solution for preventing peer node cheating.

To achieve the objectives, a client node according to an embodiment of the present invention adopts the following technical solution. The client node includes an authentication unit, a storage unit, and an identification unit.

The authentication unit is configured to authenticate validity of an ID of a peer node.

The storage unit is configured to establish and store an ID anti-forgery log about the peer node according to an authentication result of the authentication unit.

The identification unit is configured to identify a malicious peer node according to information of the peer node sending a message and the ID anti-forgery log stored by the storage unit.

The client node provided in the embodiment of the present invention stores an ID anti-forgery log at a local storage, which solves the problem that costs are high in deployment and maintenance when a PKI is deployed in the existing technical solution for preventing peer node cheating. The process for the identification unit in the client node to identify the malicious peer node by using the ID anti-forgery log is simple, effective, and the detection costs are low. The problem that message routing delay is long when signature verification is performed for each sent and received message in the existing technical solution for preventing peer node cheating is solved. When the identification unit of the client node identifies the malicious peer node by using the ID anti-forgery log, the authentication unit of the client node simply needs to verify the peer node ID, while signature verification is not necessarily performed for each sent and received message, and thus the routing delay is shortened.

In an embodiment, the present invention provides a network peer node, which addresses the problem that costs are high in deployment and maintenance when a PKI is deployed in the existing technical solution for preventing peer node cheating, and addresses the problem that message routing delay is long when signature verification is performed for each sent and received message in the existing technical solution for preventing peer node cheating.

To achieve the objectives, a network peer node according to the embodiment of the present invention adopts the following technical solution. The peer node includes an authentication unit, a storage unit, and an identification unit.

The authentication unit is configured to authenticate validity of an ID of a client node.

The storage unit is configured to establish and store an ID anti-forgery log about the client node according to an authentication result of the authentication unit.

The identification unit is configured to identify a malicious client node according to information of the client node sending a message and the ID anti-forgery log stored by the storage unit.

The peer node provided in the embodiment of the present invention stores an ID anti-forgery log at a local storage, which solves the problem that costs are high in deployment and maintenance when a PKI is deployed in the existing technical solution for preventing peer node cheating. The process for the identification unit of the peer node to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit of the peer node identifies the malicious client node by using the ID anti-forgery log, the authentication unit of the peer node simply needs to verify the client node ID, while signature verification is not necessarily performed for each sent and received message, and thus the routing delay is shortened.

In an embodiment, the present invention provides a network convergent point, which addresses the problem that costs are high in deployment and maintenance when a PKI is deployed in the existing technical solution for preventing peer node cheating, and addresses the problem that message routing delay is long when signature verification is performed for each sent and received message in the existing technical solution for preventing peer node cheating.

To achieve the objectives, a network convergent point according to the embodiment of the present invention adopts the following technical solution. The convergent point includes an authentication unit, a storage unit, and an identification unit.

The authentication unit is configured to authenticate validity of an ID of a authenticated node.

The storage unit is configured to establish and store an ID anti-forgery log about the authenticated node according to an authentication result of the authentication unit.

The identification unit is configured to identify a malicious node according to information of a node sending a message and the ID anti-forgery log stored by the storage unit.

The convergent point provided in the embodiment of the present invention stores an ID anti-forgery log at a local storage, which solves the problem that costs are high in deployment and maintenance when a PKI is deployed in the existing technical solution for preventing peer node cheating. The process for the identification unit of the convergent point to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit of the convergent point identifies the malicious node by using the ID anti-forgery log, the authentication unit of the convergent point simply needs to verify the node ID, while signature verification is not necessarily performed for each sent and received message, and thus the routing delay is shortened.

In an embodiment, the present invention further provides a system for preventing a node from forging ID in a P2P network, which addresses the problem that costs are high in deployment and maintenance when a PKI is deployed in the existing technical solution for preventing peer node cheating, and addresses the problem that message routing delay is long when signature verification for each sent and received message in the existing technical solution for preventing peer node cheating.

To achieve the objectives, the system for preventing a node from forging ID according to the embodiment of the present invention adopts the following technical solution. The system includes a peer node and a client node.

The client node is configured to find the peer node serving the client node and establish a connection with the peer node.

The peer node is configured to establish the connection with the client node sending a service request to the peer node.

At least one of the client node and the peer node acts as an authentication initiator and authenticates the other party.

After the authentication succeeds, the client node or the peer node acting as the authentication initiator locally establishes and stores an ID anti-forgery log about the other party.

In the system for preventing a node from forging ID provided in the embodiment of the present invention, the peer node or the client node stores an ID anti-forgery log at a local storage, which solves the problem that costs are high in deployment and maintenance when a PKI is deployed in the existing technical solution for preventing peer node cheating. The process for the identification units of the peer node and the client node to identify the malicious node by using the ID anti-forgery log is simple, effective, and the detection costs are low.

The problem that message routing delay is long when signature verification is performed for each sent and received message in the existing technical solution for preventing peer node cheating is solved. When the identification units of the peer node and the client node identify the malicious node by using the ID anti-forgery log, the authentication unit simply needs to verify the node ID, while signature verification is not necessarily performed for each sent and received message, and thus the routing delay is shortened.

### BRIEF DESCRIPTION OF THE DRAWINGS

FIG. 1 is a flow chart of a method for preventing a node from forging ID according to an embodiment of the present invention;
FIG. 2 is a schematic view of a method for preventing a node from forging ID by using a convergent point according to an embodiment of the present invention;
FIG. 3 is a schematic structural view of a device for preventing a node from forging ID according to an embodiment of the present invention; and
FIG. 4 is a schematic structural view of a system for preventing a node from forging ID according to an embodiment of the present invention.

### DETAILED DESCRIPTION OF THE EMBODIMENTS

A method for preventing a node from forging ID is provided in an embodiment of the present invention, so as to solve the problems of high overhead and long delay of the existing method for preventing peer node cheating in a P2P network. The method embodiment of the present invention for preventing a node from forging ID will be described in detail below with reference to the accompanying drawings.

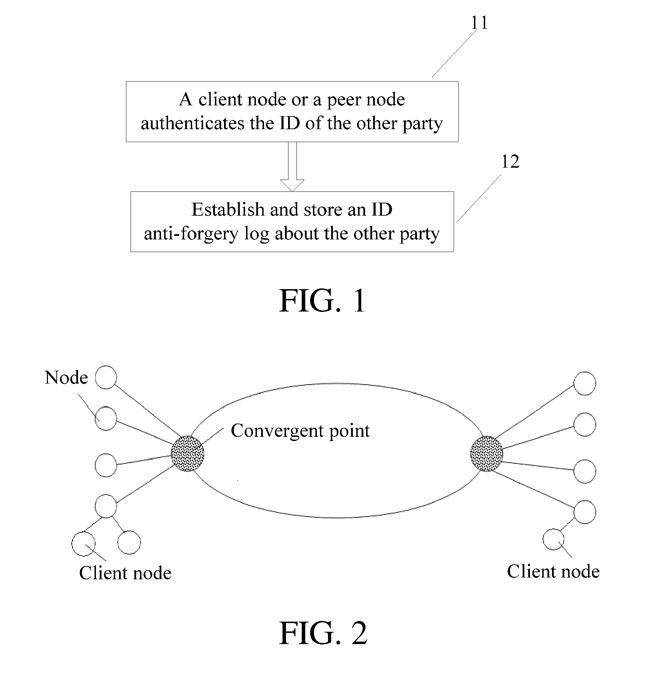

As shown in FIG.1, the method for preventing a node from forging ID provided in an embodiment of the present invention includes the following steps.

In step 11, after a client node finds a peer node serving the client node, at least one of the client node and the peer node acts as an authentication initiator and authenticates the other party.

The authentication includes one-way authentication and mutual authentication.

The one-way authentication is as follows: The authentication initiator (either the client node or the peer node) authenticates the ID of the other party, that is, the client node authenticates the peer node ID, or the peer node authenticates the client node ID.

The mutual authentication is as follows: The client node authenticates the peer node ID, and the peer node authenticates the client node ID.

The specific authentication process is covered in prior art, and will not be described in detail here.

In step 12, after the authentication succeeds, the client node or the peer node acting as the authentication initiator locally establishes and stores an ID anti-forgery log about the other party.

In the one-way authentication, if the client node is the authentication initiator, the client node locally establishes an ID anti-forgery log about the peer node. The ID anti-forgery log includes the ID of the peer node, a physical address of the peer node, and one or more mapping relation(s) between the ID of the peer node and the physical address of the peer node.

In the one-way authentication, if the peer node is the authentication initiator, the peer node locally establishes an ID anti-forgery log about the client node. The ID anti-forgery log includes the ID of the client node, the physical address of the client node, and one or more mapping relation(s) between the ID of the client node and the physical address of the client node.

In the mutual authentication, the peer node locally establishes an ID anti-forgery log about the client node, and the client node locally establishes an ID anti-forgery log about the peer node.

The ID of the peer node includes peer node identification, and the ID of the client node includes client node identification. The physical address may be a MAC address, or IP address, or Asynchronous Transfer Mode Virtual Path Identifier/Virtual Channel Identifier (ATM VPI/VCI), or Virtual Local Area Network ID (VLAN ID) of the node, or may be a physical connecting address between the client node and the peer node. One peer node may have a mapping relation with at least two physical addresses.

The node establishes and stores an ID anti-forgery log about the other party, and identifies the malicious node by using the ID anti-forgery log. When the client node locally establishes and stores the ID anti-forgery log about the other party, the specific process for the client node to identify the malicious node is as follows.

After receiving the message sent by the peer node, the client node acts as the authentication initiator and authenticates the mapping relation(s) between the ID of the peer node and the physical address of the peer node.

If the mapping relation(s) between the ID of the peer node and the physical address of the peer node is consistent with the record in the ID anti-forgery log owned by the initiator, the peer node is not a malicious node; If the mapping relation(s) between the ID of the peer node and the physical address of the peer node is inconsistent with the record in the ID anti-forgery log owned by the initiator, the peer node is a malicious node.

When the peer node locally establishes and stores the ID anti-forgery log about the other party, the specific process for the peer node to identify the malicious node is as follows.

After receiving the message sent by the client node, the peer node acts as the authentication initiator and authenticates the mapping relation(s) between the ID of the client node and the physical address of the client node.

If the mapping relation(s) between the ID of the client node and the physical address of the client node is consistent with the record in the ID anti-forgery log owned by the initiator, the client node is not a malicious node; If the mapping relation(s) between the ID of the client node and the physical address of the client node is inconsistent with the record in the ID anti-forgery log owned by the initiator, the client node is not a malicious node, the client node is a malicious node.

In the method for preventing a node from forging ID provided in the embodiment of the present invention, the peer node or the client node locally stores an ID anti-forgery log, which solves the problem that costs are high in deployment and maintenance when a PKI is deployed in the existing technical solution for preventing peer node cheating. The process of malicious node identification by using the ID anti-forgery log is simple, effective, and the detection costs are low. The problem that message routing delay is long when signature verification is performed for each sent and received message in the existing technical solution for preventing peer node cheating is solved. When the malicious node is identified by using the ID anti-forgery log, only the node ID needs to be verified, while signature verification is not necessarily performed for each sent and received message, and thus the routing delay is shortened.

If the physical address of the peer node changes, the client node deletes an ID anti-forgery record about the peer node from the ID anti-forgery log.

After the peer node obtains a new physical address, the client node re-authenticates the peer node.

After the authentication succeeds, the client node stores the mapping relation(s) between the ID of the peer node and the new physical address of the peer node in the local ID anti-forgery log.

When the peer node serving the client node leaves the P2P network, the peer node notifies the mapping relation(s) between the ID of the client node and the physical address of the client node to a proxy peer node, and notifies the client node that the proxy peer node continues to serve the client node.

Before accepting the service provided by the proxy peer node, the client node firstly authenticates an ID of the proxy peer node.

After the authentication succeeds, the client node adds the mapping relation(s) between the ID of the proxy peer node and the physical address of the proxy peer node to the local ID anti-forgery log.

Then, the client node accepts the service provided by the proxy peer node.

As shown in FIG.2, in some application scenarios, convergent points that can sense the message in the P2P network are connected in the P2P network. Each peer node is connected to the P2P network via the convergent point, and the peer nodes can also connect with client nodes. The message among the peer nodes is forwarded to the P2P network via a certain convergent point. These convergent points have a basic message parsing function. The convergent points parse the received message through deep packet inspection (DPI) to obtain the message content, extract the mapping relation(s) between the ID of the peer node and the physical address of the peer node from the message, and establish an ID anti-forgery log about the peer node.

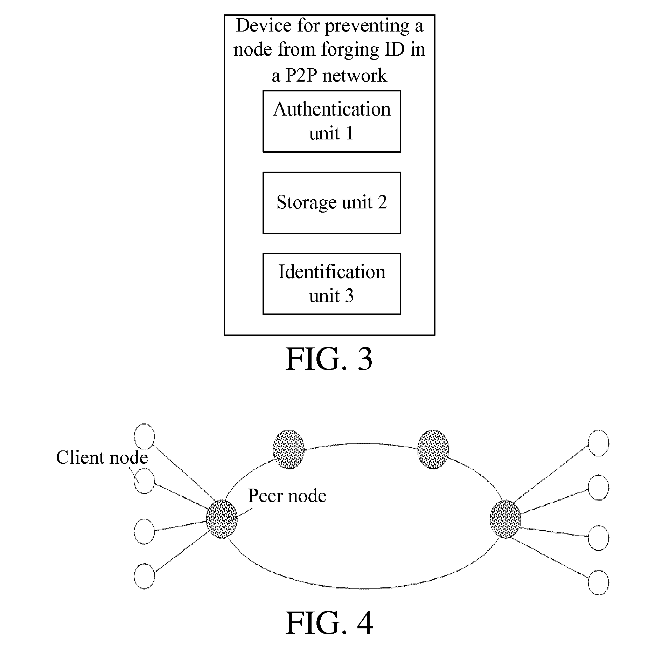

The embodiment of the present invention further provides a device for preventing a node from forging ID in a P2P network. As shown in FIG. 3, the device includes an authentication unit 1, a storage unit 2, and an identification unit 3.

The authentication unit 1 is configured to authenticate validity of an ID of a node.

The storage unit 2 is configured to establish and store an ID anti-forgery log about the authenticated node.

The identification unit 3 is configured to identify a malicious node according to the ID anti-forgery log.

Nodes include a client node and a peer node. If a node is a client node, the ID anti-forgery log of the node includes: The ID of the peer node, the physical address of the peer node, and the mapping relation(s) between the ID of the peer node and the physical address. The peer node ID includes peer node identification. If a node is a peer node, the ID anti-forgery log of the node includes the ID of the client node, the physical address of the client node, and the mapping relation(s) between the ID of the client node and the physical address of the client node.

The process of malicious node identification according to the ID anti-forgery log has been described in detail in the method embodiment, and will not be described again here.

In the device for preventing a node from forging ID provided in the embodiment of the present invention, the node stores an ID anti-forgery log in a local storage unit, which solves the problem that costs are high in deployment and maintenance when a PKI is deployed in the existing technical solution for preventing peer node cheating. The process for the identification unit to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit identifies the malicious node by using the ID anti-forgery log, the authentication unit simply needs to verify the node ID, while signature verification is not necessarily performed for each sent and received message, and thus the routing delay is shortened.

The embodiment of the present invention further provides a client node, which includes an authentication unit, a storage unit, and an identification unit.

The authentication unit is configured to authenticate validity of an ID of a peer node.

The storage unit is configured to establish and store an ID anti-forgery log about the peer node according to an authentication result of the authentication unit.

The identification unit is configured to identify a malicious peer node according to information of the peer node sending a message and the ID anti-forgery log stored by the storage unit.

The ID anti-forgery log about the peer node includes the ID of the peer node, the physical address of the peer node, and the mapping relation(s) between the ID of the peer node and the physical address of the peer node.

The client node can identify a malicious peer node, and the specific process of malicious peer node identification has been described in detail in the method embodiment, and will not be described again here.

The client node provided in the embodiment of the present invention stores an ID anti-forgery log at a local storage, which solves the problem that costs are high in deployment and maintenance when a PKI is deployed in the existing technical solution for preventing peer node cheating. The process for the identification unit of the client node to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit of the client node identifies the malicious peer node by using the ID anti-forgery log, the authentication unit of the client node simply needs to verify the ID of the peer node, while signature verification is not necessarily performed for each sent and received message, and thus the routing delay is shortened.

The embodiment of the present invention provides a network peer node, which includes an authentication unit, a storage unit, and an identification unit.

The authentication unit is configured to authenticate validity of an ID of a client node.

The storage unit is configured to establish and store an ID anti-forgery log about the client node according to an authentication result of the authentication unit.

The identification unit is configured to identify a malicious client node according to information of the client node sending a message and the ID anti-forgery log stored by the storage unit.

The ID anti-forgery log about the client node includes the ID of the client node, the physical address of the client node, and one or more mapping relation(s) between the ID of the client node and the physical address of the client node.

The peer node can identify the malicious client node, and the process of malicious client node identification has been described in detail in the method embodiment, and will not be described again here.

The network peer node provided in the embodiment of the present invention stores an ID anti-forgery log at a local storage, which solves the problem that costs are high in deployment and maintenance when a PKI is deployed in the existing technical solution for preventing peer node cheating. The process for the identification unit in the peer node to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit of the peer node identifies the malicious client node by using the ID anti-forgery log, the authentication unit of the peer node simply needs to verify the client node ID, while signature verification is not necessarily performed for each sent and received message, and thus the routing delay is shortened.

The embodiment of the present invention provides a network convergent point, which includes an authentication unit, a storage unit, and an identification unit.

The authentication unit is configured to authenticate validity of an ID of a authenticated peer node.

The storage unit is configured to establish and store an ID anti-forgery log about the authenticated peer node according to an authentication result of the authentication unit.

The identification unit is configured to identify a malicious node according to information of a node sending a message and the ID anti-forgery log stored by the storage unit.

The ID anti-forgery log about the peer node includes the ID of the peer node, the physical address of the peer node, and one or more mapping relation(s) between the ID and the physical address.

The convergent point can identify a malicious node, the specific process of which has been described in detail in the method embodiment, and will not be described again here.

The network convergent point provided in the embodiment of the present invention stores an ID anti-forgery log at a local storage, which solves the problem that costs are high in deployment and maintenance when a PKI is deployed in the existing technical solution for preventing peer node cheating. The process for the identification unit of the convergent point to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit of the convergent point identifies the malicious node by using the ID anti-forgery log, the authentication unit of the convergent point simply needs to verify the node ID, while signature verification is not necessarily performed for each sent and received message, and thus the routing delay is shortened.

The embodiment of the present invention further provides a system for preventing a node from forging ID in a P2P network. As shown in FIG. 4, the system includes a peer node and a client node.

The client node is configured to find the peer node serving the client node and establish a connection with the peer node.

The peer node is configured to establish the connection with the client node sending a service request to the peer node.

At least one of the client node and the peer node acts as an authentication initiator and authenticates an ID of the other party.

After the authentication succeeds, the client node or the peer node acting an authentication initiator locally establishes and stores an ID anti-forgery log about the other party.

The ID anti-forgery log about the peer node includes the ID of the peer node, the physical address of the peer node, and one or more mapping relation(s) between the ID of the peer node and the physical address of the peer node. The ID anti-forgery log about the client node includes the ID of the client node, the physical address of the client node, and one or more mapping relation(s) between the ID of the client node and the physical address of the client node.

In some application scenarios, the system for preventing a node from forging ID in a P2P network provided in the embodiment of the present invention further includes a convergent point, which connects with at least one peer node, and the peer node connects with the client node.

The peer node is configured to find the convergent point serving the peer node and establish a connection with the convergent point.

The convergent point is configured to establish the connection with the peer node sending a service request to the convergent point.

The convergent point acts as an authentication initiator and authenticates an ID of the peer node.

After the authentication succeeds, the convergent point acting as the authentication initiator locally establishes and stores an ID anti-forgery log about the peer node.

A node is a client node or a peer node. If a node is a client node, the ID anti-forgery log of the node includes: the ID of the peer node, and the physical address of the peer node, and one or more mapping relation(s) between the ID of the peer node and the physical address of the client node. If a node is a peer node, the ID anti-forgery log of the node includes the ID of the client node, the physical address of the client node, and the mapping relation(s) between the ID of the client node and the physical address of the client node.

The system can identify a malicious node, the specific process of which has been described in detail in the method embodiment, and will not be described in detail here.

In the system for preventing a node from forging ID provided in the embodiment of the present invention, the peer node, the client node, or the convergent point stores an ID anti-forgery log at a local storage, which solves the problem that costs are high in deployment and maintenance when a PKI is deployed in the existing technical solution for preventing peer node cheating. The process for the peer node, the client node, or the convergent point to identify the malicious node by using the ID anti-forgery log is simple, effective, and the detection costs are low. The problem that message routing delay is long when signature verification is performed for each sent and received message in the existing technical solution for preventing peer node cheating is solved. When the peer node, the client node, or the convergent point identifies the malicious node by using the ID anti-forgery log, only the node ID needs to be verified, while signature verification is not necessarily performed for each sent and received message, and thus the routing delay is shortened.

The embodiment of the present invention provides a method for preventing a node from forging identity, ID, in a Peer to Peer, P2P, network, wherein the peer network comprises a peer node and a client node, wherein the method comprises:
after the client node finds the peer node serving the client node, acting, by at least one of the client node and the peer node, as an authentication initiator, and authenticating (11) an ID of the other party; and
after the authentication succeeds, locally establishing and storing (12), by the client node or the peer node acting as the authentication initiator, an ID anti-forgery log about the other party.

The method for preventing a node from forging ID in a P2P network, wherein the node acting as an authentication initiator is the client node or the peer node,
if the node acting as an authentication initiator is the client node, the ID anti-forgery log about the other party comprises the ID of the peer node, a physical address of the peer node, and one ore more mapping relation(s) between the ID of the peer node and the physical address of the peer node;
if the node acting as an authentication initiator is the peer node, the ID anti-forgery log about the other party comprises the ID of the client node, a physical address of the client node, and one or more mapping relation(s) between the ID of the client node and the physical address of the client node.

The method for preventing a node from forging ID in a P2P network, wherein
if the node acting as an authentication initiator is the client node, the method further comprises:
after receiving a message sent by the peer node, acting, by the client node, as the authentication initiator, and authenticating the mapping relation(s) between the ID of the peer node and the physical address of the peer node; and
if the mapping relation(s) between the ID of the peer node and the physical address of the peer node is consistent with a record in the ID anti-forgery log owned by the client node, regarding the peer node as not a malicious node; if the mapping relation(s) between the ID of the peer node and the physical address of the peer node is inconsistent with a record in the ID anti-forgery log owned by the client node, regarding the peer node as a malicious node;
if the node acting as an authentication initiator is the peer node, the method further comprises:
after receiving a message sent by the client node, acting, by the peer node, as the authentication initiator, and authenticating the mapping relation(s) between the ID of the client node and the physical address of the client node; and
if the mapping relation(s) between the ID of the client node and the physical address of the client node is consistent with a record in the ID anti-forgery log owned by the peer node, regarding the client node as not a malicious node; if the mapping relation(s) between the ID of the client node and the physical address of the client node is inconsistent with a record in the ID anti-forgery log owned by the peer node, regarding the client node as a malicious node.

The method for preventing a node from forging ID in a P2P network, wherein the method further comprises:
if the node acting as an authentication initiator comprises the client node, and the physical address of the peer node changes, deleting, by the client node, an ID anti-forgery record about the peer node;
re-authenticating, by the client node, the peer node; and
after the authentication succeeds, storing the mapping relation(s) between the ID of the peer node and the new physical address of the peer node in the local ID anti-forgery log.

The method for preventing a node from forging ID in a P2P network, further comprising:
if the node acting as an authentication initiator comprises the peer node, and the peer node serving the client node leaves the P2P network, notifying, by the peer node, the mapping relation(s) between the ID of the client node and the physical address of the client node to a proxy peer node, and notifying the client node that the proxy peer node continues to provide a service to the client node;
authenticating, by the client node, an ID of the proxy peer node;
after the authentication succeeds, adding, by the client node, the mapping relation(s) between the ID of the proxy peer node and a physical address of the proxy peer node to the local ID anti-forgery log; and
accepting, by the client node, the service provided by the proxy peer node.

The method for preventing a node from forging ID in a P2P network, wherein the mapping relation(s) between the ID of the peer node and the physical address of the peer node is the mapping relation(s) between one peer node and at least two physical addresses of the peer node.

The method for preventing a node from forging ID in a P2P network, wherein the peer network further comprises a convergent point connected to at least one peer node, the method further comprising:
after the peer node finds the convergent point serving the peer node, authenticating, by the convergent point, an ID of the peer node; and
after the authentication succeeds, locally establishing and storing, by the convergent point, the ID anti-forgery log about the peer node.

The method for preventing a node from forging ID in a P2P network, wherein the node acting as an authentication initiator is the client node or the peer node,
if the node acting as an authentication initiator is the client node, the ID anti-forgery log about the other party comprises the ID of the peer node, the physical address of the peer node, and
the mapping relation(s) between the ID of the peer node and the physical address of the peer node; and
if the node acting as an authentication initiator is the peer node, the ID anti-forgery log about the other party comprises the ID of the client node, the physical address of the client node, and the mapping relation(s) between the ID of the client node and the physical address of the client node.

The method for preventing a node from forging ID in a P2P network, wherein after the peer node finds the convergent point serving the peer node, authenticating, by the convergent point, the ID of the node comprises:
after receiving a message sent by the peer node, authenticating, by the convergent point, a message through deep packet inspection, DPI; and
extracting the ID of the peer node and the physical address of the peer node.

The embodiment of the present invention provides a device for preventing a node from forging identity, ID, in a Peer to Peer, P2P network, comprising an authentication unit, a storage unit, and an identification unit, wherein
the authentication unit is configured to authenticate validity of an ID of the node;
the storage unit is configured to establish and store an ID anti-forgery log about the authenticated node, and
the identification unit is configured to identify a malicious node according to the ID anti-forgery log.

The device for preventing a node from forging ID in a P2P network, wherein the node is a client node or a peer node,
if the node is the peer node, the ID anti-forgery log about the authenticated node comprises the ID of the peer node, a physical address of the peer node, and one or more mapping relation(s) between the ID of the peer node and the physical address of the peer node; and
if the node is the client node, the ID anti-forgery log about the authenticated node comprises the ID of the client node, a physical address of the client node and one or more mapping relation(s) between the ID of the client node and the physical address of the client node.

The embodiment of the present invention provides a client node, comprising an authentication unit, a storage unit, and an identification unit, wherein
the authentication unit is configured to authenticate validity of an identity (ID) of a peer node;
the storage unit is configured to establish and store an ID anti-forgery log about the peer node according to an authentication result of the authentication unit; and
the identification unit is configured to identify a malicious peer node according to information of the peer node sending a message and the ID anti-forgery log stored by the storage unit.

The embodiment of the present invention provides a network peer node, comprising an authentication unit, a storage unit, and an identification unit, wherein
the authentication unit is configured to authenticate validity of an identity (ID) of a client node;
the authentication unit is configured to establish and store an ID anti-forgery log about the client node according to an authentication result of the authentication unit; and
the identification unit is configured to identify a malicious client node according to information of the client node sending a message and the ID anti-forgery log stored by the storage unit.

The embodiment of the present invention provides a network convergent point, comprising an authentication unit, a storage unit, and an identification unit, wherein
the authentication unit is configured to authenticate validity of an identity (ID) of a authenticated peer node;
the storage unit is configured to establish and store an ID anti-forgery log about the authenticated peer node according to an authentication result of the authentication unit; and
the identification unit is configured to identify a malicious node according to information of the peer node sending a message and the ID anti-forgery log stored by the storage unit.

The embodiment of the present invention provides a system for preventing a node from forging identity, ID, in a Peer to Peer, P2P, network, comprising a peer node and a client node, wherein
the client node is configured to find the peer node serving the client node and establish a connection with the client node;
the peer node is configured to establish the connection with the client node sending a service request to the peer node;
at least one of the client node and the peer node acts as an authentication initiator and authenticates the other party; and
after the authentication succeeds, the client node or the peer node acting as the authentication initiator locally establishes and stores an ID anti-forgery log about the other party.

The system for preventing a node from forging ID in a P2P network, wherein
if the node acting as an authentication initiator is the client node, the ID anti-forgery log about the other party comprises an ID of the peer node, a physical address of the peer node and one or more mapping relation(s) between the ID of the peer node and the physical address of the peer node; and
if the node acting as an authentication initiator is the peer node, the ID anti-forgery log about the other party comprises an ID of the client, a physical address of the client node, and one or more mapping relation(s) between the ID of the client node and the physical address of the client node.

The system for preventing a node from forging ID in a P2P network, further comprising a convergent point connected in the P2P network, wherein the convergent point is connected to at least one peer node,
the peer node is configured to find the convergent point serving the peer node and establish a connection with the convergent point;
the convergent point is configured to establish the connection with the peer node sending a service request to the convergent node;
the convergent point acts as an authentication initiator and authenticates an ID of the peer node; and
after the authentication succeeds, the convergent point acting as the authentication initiator locally establishes and stores an ID anti-forgery log about the peer node.

Those skilled in the art may understand that all or part of the steps of the method according to the embodiments of the present invention may be implemented by a program instructing relevant hardware. The program may be stored in a computer readable storage medium, such as a Read-Only Memory (ROM), a Random Access Memory (RAM), a magnetic disk or a Compact Disk Read-Only Memory (CD-ROM).

The above descriptions are merely some exemplary embodiments of the present invention, but not intended to limit the scope of the present invention. Any modification, equivalent replacement, or improvement made without departing from the principle of the present invention should fall within the scope of the present invention. Therefore, the protection scope of the present invention is subject to the appended claims.

## Claims

1. A method for preventing a node from forging identity, ID, in a Peer to Peer, P2P, network, wherein the peer network comprises a peer node and a client node, wherein the method comprises:
after the client node finds the peer node serving the client node, acting, by at least one of the client node and the peer node, as an authentication initiator, and authenticating (11) an ID of the other party; and
after the authentication succeeds, locally establishing and storing (12), by the client node or the peer node acting as the authentication initiator, an ID anti-forgery log about the other party.

2. The method for preventing a node from forging ID in a P2P network according to claim 1, wherein the node acting as an authentication initiator is the client node or the peer node,
if the node acting as an authentication initiator is the client node, the ID anti-forgery log about the other party comprises the ID of the peer node, a physical address of the peer node, and one ore more mapping relation(s) between the ID of the peer node and the physical address of the peer node;
if the node acting as an authentication initiator is the peer node, the ID anti-forgery log about the other party comprises the ID of the client node, a physical address of the client node, and one or more mapping relation(s) between the ID of the client node and the physical address of the client node.

3. The method for preventing a node from forging ID in a P2P network according to claim 1, wherein
if the node acting as an authentication initiator is the client node, the method further comprises:
after receiving a message sent by the peer node, acting, by the client node, as the authentication initiator, and authenticating the mapping relation(s) between the ID of the peer node and the physical address of the peer node; and
if the mapping relation(s) between the ID of the peer node and the physical address of the peer node is consistent with a record in the ID anti-forgery log owned by the client node, regarding the peer node as not a malicious node; if the mapping relation(s) between the ID of the peer node and the physical address of the peer node is inconsistent with a record in the ID anti-forgery log owned by the client node, regarding the peer node as a malicious node;
if the node acting as an authentication initiator is the peer node, the method further comprises:
after receiving a message sent by the client node, acting, by the peer node, as the authentication initiator, and authenticating the mapping relation(s) between the ID of the client node and the physical address of the client node; and
if the mapping relation(s) between the ID of the client node and the physical address of the client node is consistent with a record in the ID anti-forgery log owned by the peer node, regarding the client node as not a malicious node; if the mapping relation(s) between the ID of the client node and the physical address of the client node is inconsistent with a record in the ID anti-forgery log owned by the peer node, regarding the client node as a malicious node.

4. The method for preventing a node from forging ID in a P2P network according to claim 2 or 3, wherein the method further comprises:
if the node acting as an authentication initiator comprises the client node, and the physical address of the peer node changes, deleting, by the client node, an ID anti-forgery record about the peer node;
re-authenticating, by the client node, the peer node; and
after the authentication succeeds, storing the mapping relation(s) between the ID of the peer node and the new physical address of the peer node in the local ID anti-forgery log.

5. The method for preventing a node from forging ID in a P2P network according to claim 1, further comprising:
if the node acting as an authentication initiator comprises the peer node, and the peer node serving the client node leaves the P2P network, notifying, by the peer node, the mapping relation(s) between the ID of the client node and the physical address of the client node to a proxy peer node, and notifying the client node that the proxy peer node continues to provide a service to the client node;
authenticating, by the client node, an ID of the proxy peer node;
after the authentication succeeds, adding, by the client node, the mapping relation(s) between the ID of the proxy peer node and a physical address of the proxy peer node to the local ID anti-forgery log; and
accepting, by the client node, the service provided by the proxy peer node.

6. The method for preventing a node from forging ID in a P2P network according to claim 2, wherein the mapping relation(s) between the ID of the peer node and the physical address of the peer node is the mapping relation(s) between one peer node and at least two physical addresses of the peer node.

7. The method for preventing a node from forging ID in a P2P network according to claim 1, wherein the peer network further comprises a convergent point connected to at least one peer node, the method further comprising:
after the peer node finds the convergent point serving the peer node, authenticating, by the convergent point, an ID of the peer node; and
after the authentication succeeds, locally establishing and storing, by the convergent point, the ID anti-forgery log about the peer node.

8. The method for preventing a node from forging ID in a P2P network according to claim 7, wherein the node acting as an authentication initiator is the client node or the peer node,
if the node acting as an authentication initiator is the client node, the ID anti-forgery log about the other party comprises the ID of the peer node, the physical address of the peer node, and the mapping relation(s) between the ID of the peer node and the physical address of the peer node; and
if the node acting as an authentication initiator is the peer node, the ID anti-forgery log about the other party comprises the ID of the client node, the physical address of the client node, and the mapping relation(s) between the ID of the client node and the physical address of the client node.

9. The method for preventing a node from forging ID in a P2P network according to claim 7, wherein after the peer node finds the convergent point serving the peer node, authenticating, by the convergent point, the ID of the node comprises:
after receiving a message sent by the peer node, authenticating, by the convergent point, a message through deep packet inspection, DPI; and
extracting the ID of the peer node and the physical address of the peer node.

10. A device for preventing a node from forging identity, ID, in a Peer to Peer, P2P network, comprising an authentication unit (1), a storage unit (2), and an identification unit (3), wherein
the authentication unit (1) is configured to authenticate validity of an ID of the node;
the storage unit (2) is configured to establish and store an ID anti-forgery log about the authenticated node, and
the identification unit (3) is configured to identify a malicious node according to the ID anti-forgery log.

11. The device for preventing a node from forging ID in a P2P network according to claim 10, wherein the node is a client node or a peer node,
if the node is the peer node, the ID anti-forgery log about the authenticated node comprises the ID of the peer node, a physical address of the peer node, and one or more mapping relation(s) between the ID of the peer node and the physical address of the peer node; and
if the node is the client node, the ID anti-forgery log about the authenticated node comprises the ID of the client node, a physical address of the client node and one or more mapping relation(s) between the ID of the client node and the physical address of the client node.

12. A client node, comprising an authentication unit, a storage unit, and an identification unit, wherein
the authentication unit is configured to authenticate validity of an identity (ID) of a peer node;
the storage unit is configured to establish and store an ID anti-forgery log about the peer node according to an authentication result of the authentication unit; and
the identification unit is configured to identify a malicious peer node according to information of the peer node sending a message and the ID anti-forgery log stored by the storage unit.

13. A network peer node, comprising an authentication unit, a storage unit, and an identification unit, wherein
the authentication unit is configured to authenticate validity of an identity (ID) of a client node;
the authentication unit is configured to establish and store an ID anti-forgery log about the client node according to an authentication result of the authentication unit; and
the identification unit is configured to identify a malicious client node according to information of the client node sending a message and the ID anti-forgery log stored by the storage unit.

14. A network convergent point, comprising an authentication unit, a storage unit, and an identification unit, wherein
the authentication unit is configured to authenticate validity of an identity (ID) of a authenticated peer node;
the storage unit is configured to establish and store an ID anti-forgery log about the authenticated peer node according to an authentication result of the authentication unit; and
the identification unit is configured to identify a malicious node according to information of the peer node sending a message and the ID anti-forgery log stored by the storage unit.

15. A system for preventing a node from forging identity, ID, in a Peer to Peer, P2P, network, comprising a peer node and a client node, wherein
the client node is configured to find the peer node serving the client node and establish a connection with the client node;
the peer node is configured to establish the connection with the client node sending a service request to the peer node;
at least one of the client node and the peer node acts as an authentication initiator and authenticates the other party; and
after the authentication succeeds, the client node or the peer node acting as the authentication initiator locally establishes and stores an ID anti-forgery log about the other party.

16. The system for preventing a node from forging ID in a P2P network according to claim 15, wherein
if the node acting as an authentication initiator is the client node, the ID anti-forgery log about the other party comprises an ID of the peer node, a physical address of the peer node and one or more mapping relation(s) between the ID of the peer node and the physical address of the peer node; and
if the node acting as an authentication initiator is the peer node, the ID anti-forgery log about the other party comprises an ID of the client, a physical address of the client node, and one or more mapping relation(s) between the ID of the client node and the physical address of the client node.

17. The system for preventing a node from forging ID in a P2P network according to claim 15, further comprising a convergent point connected in the P2P network, wherein the convergent point is connected to at least one peer node,
the peer node is configured to find the convergent point serving the peer node and establish a connection with the convergent point;
the convergent point is configured to establish the connection with the peer node sending a service request to the convergent node;
the convergent point acts as an authentication initiator and authenticates an ID of the peer node; and
after the authentication succeeds, the convergent point acting as the authentication initiator locally establishes and stores an ID anti-forgery log about the peer node.
